(19) Europäisches Patentamt
European Patent Office
Office européen des brevets

(11) EP 2 287 459 B1

(12) **EUROPEAN PATENT SPECIFICATION**

(45) Date of publication and mention
of the grant of the patent:
**05.12.2018 Bulletin 2018/49**

(51) Int Cl.:
*F02M 35/16* *(2006.01)*     *B62K 11/10* *(2006.01)*

(21) Application number: **10166910.9**

(22) Date of filing: **22.06.2010**

(54) **Motorcycle**

Motorrad

Motocyclette

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **03.02.2010 JP 2010022352
07.07.2009 JP 2009161099**

(43) Date of publication of application:
**23.02.2011 Bulletin 2011/08**

(73) Proprietor: **Yamaha Hatsudoki Kabushiki Kaisha
Shizuoka 438-8501 (JP)**

(72) Inventors:
• **Kurihara, Koji
Iwata-shi Shizuoka 438-8501 (JP)**

• **Miyoshi, Nobuyuki
Iwata-shi Shizuoka 438-8501 (JP)**

(74) Representative: **Grünecker Patent- und
Rechtsanwälte
PartG mbB
Leopoldstraße 4
80802 München (DE)**

(56) References cited:
**EP-A2- 0 742 138      JP-A- 1 223 091
JP-A- 2000 227 059    JP-A- 2007 168 530
KR-A- 20080 046 554**

## Description

**The present invention relates to motorcycles. The invention more particularly relates to a structure of an air cleaner in a motorcycle according to the preamble of claim 1. Such a motorcycle is known from** KR 2008-0046554 A.

There have been known motorcycles including unit swing type power units. The power unit has an engine. The unit swing type power unit is supported swingably at a vehicle body frame.

In a motorcycle disclosed by JP 01-223091 A, a rear wheel is provided behind a power unit. A footboard is provided in front of and below a seat on which a rider is seated and a storage box is provided under the seat and over the power unit.

In the motorcycle disclosed by JP 01-223091 A, an air cleaner is provided under the storage box. The air cleaner is provided over an engine and under the seat. A vehicle body cover used to cover the storage box and an upper portion of the rear wheel is provided under the seat. The vehicle body cover covers a lateral sides of the vehicle body. The vehicle body cover is provided in a position overlapping the rear wheel when seen in a side view. The air cleaner is provided on the inner side of the vehicle body cover. The air cleaner swings together with the power unit. The power unit is supported swingably at the vehicle body frame through a pivot shaft. The pivot shaft is positioned above the power unit.

In the motorcycle disclosed by JP 01-223091 A, the vehicle body cover is large enough to cover an upper lateral portion of the rear wheel, and therefore the storage box hidden by the vehicle body cover may have a large size.

A motorcycle including a unit swing type power unit is proposed by JP 2007-168530 A. In the motorcycle disclosed by JP 2007-168530 A, an air cleaner also swings together with the power unit. A lower edge of a vehicle body cover extends backward and upward when seen in a side view and a space is formed between the lower edge of the vehicle body cover and the rear wheel with respect to the vertical direction. The power unit is supported swingably at a vehicle body frame through a pivot shaft. The pivot shaft is provided under the power unit.

In the motorcycle disclosed by JP 01-223091 A, an air cleaner is provided inside a vehicle body cover. In the motorcycle disclosed by JP 2007-168530 A, the air cleaner is provided in a position overlapping the center of the vehicle body. In other words, the air cleaner is provided in the center of the vehicle body with respect to the vehicle widthwise direction (Fig. 3 in JP 2007-168530 A). In the motorcycles disclosed by JP 01-223091 A and JP 2007-168530 A, water, dust and the like are less likely to come into the air cleaner.

In the motorcycle disclosed by JP 01-223091 A, the lower edge of the vehicle body cover overlaps the rear wheel when seen in a side view and the rear part of the vehicle has an increased size. In the motorcycle disclosed by JP 2007-168530 A, the lower edge of the vehicle body cover extends backward and upward and a space is formed between the lower edge of the vehicle body cover and the rear wheel with respect to the vertical direction when seen in a side view. The motorcycle disclosed by JP 2007-168530 A can be made compact without increasing the size of the rear part of the vehicle.

In the motorcycle disclosed by JP 2007-168530 A, however, the vertical length of the vehicle body cover is shorter than that of the motorcycle disclosed by JP 01-223091 A. The storage box is positioned above the lower end of the vehicle body cover when seen in a side view. Therefore, it is difficult to increase the size of the storage box in the motorcycle disclosed by JP 2007-168530 A.

A relatively large space is necessary over the air cleaner and under the storage box so that the air cleaner does not contact the storage box when the air cleaner swings. Therefore, it is difficult to secure a sufficient space in the air cleaner and the storage box.

A motorcycle according to a preferred embodiment of the invention includes a frame, a seat, a storage box, a power unit, a pivot shaft, a rear wheel, a cover, and an air cleaner. The seat is supported at the frame. The storage box is provided under the seat. The power unit includes a cylinder in the front portion and is provided under the storage box. The pivot shaft extends in the vehicle widthwise direction under the cylinder and supports the power unit in a swingable manner relative to the frame. A rear wheel is positioned behind the cylinder and coupled to the power unit. The cover has a lower edge arranged to extend backward and upward and positioned above the rear wheel when seen in a side view and is provided below the seat to cover at least a part of a side of the storage box when seen in a side view. The air cleaner is positioned over or on the cylinder and under the storage box to swing together with the power unit. In a motorcycle including a unit swing type power unit, water, dust, and the like coming into the air cleaner can be reduced and the capacity of the storage box under the seat can be increased even in a compact vehicle body.

It is an object of an embodiment of the present invention to reduce water, dust, and the like coming into the air cleaner and increase the capacity of the storage box under the seat even in a compact vehicle body in a motorcycle including a unit swing type power unit having a space formed between the lower edge of the vehicle body cover and the rear wheel with respect to the vertical direction when seen in a side view.

Other features, elements, steps, characteristics and advantages of the present invention will become more apparent from the following detailed description of the preferred embodiments of the present invention with reference to the attached drawings.

Fig. 1 is a left side view of a motorcycle 1 according to a preferred embodiment of the present invention.

Fig. 2 is a left side view of the motorcycle showing a peripheral structure of an engine 8.

Fig. 3 is a left side sectional view of the engine 8 and a peripheral structure of an air cleaner.

Fig. 4 is a top sectional view of a structure of a pivot shaft.

Fig. 5A is a sectional view of a right side part of a fuel tank 9 as seen from the front.

Fig. 5B is a sectional view of a left side part of the fuel tank 9 as seen from the front.

Fig. 6A is a plan view of a right side part of the fuel tank 9.

Fig. 6B is a plan view of a left side part of the fuel tank 9.

Fig. 7 is a right side view of the air cleaner.

Fig. 8 is a front view of the air cleaner.

Fig. 9 is a bottom view of the air cleaner.

Fig. 10 is a sectional view of an intake duct.

Fig. 11 is a plan view of a storage box 50.

Fig. 12 is a left side view of the storage box 50.

Fig. 13 is a front view of the storage box 50.

Fig. 14 is a perspective view of the air cleaner 30 and the storage box 50 as seen from the lower left.

Fig. 15A is a plan view of the air cleaner 30.

Fig. 15B is a left side view of the air cleaner 30.

Fig. 16 is a left side view of the storage box 50 having a helmet 10 stored therein.

Fig. 17 is a left side view showing the positional relation between a pivot shaft 18, the engine 8, the air cleaner 30, and the storage box 50.

Fig. 18 is a view of a power unit 29 in the "upper part support" arrangement.

Fig. 19 is a left side view showing the positional relation between the storage box 50 and the intake duct.

Fig. 20 is a left side sectional view of the engine 8 and the peripheral structure of the air cleaner 30 according to a second preferred embodiment of the invention.

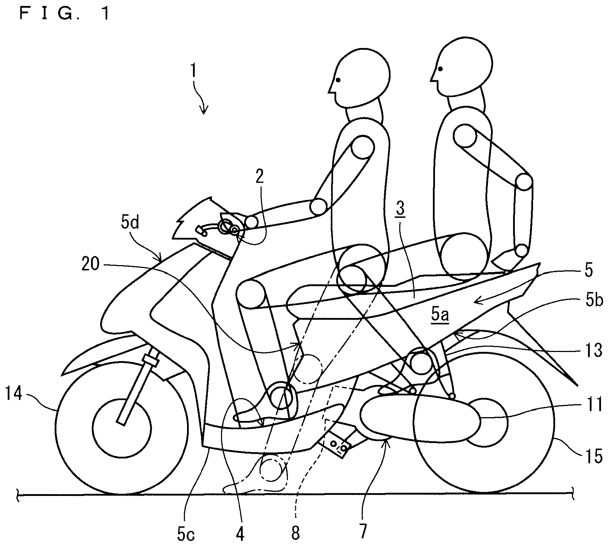

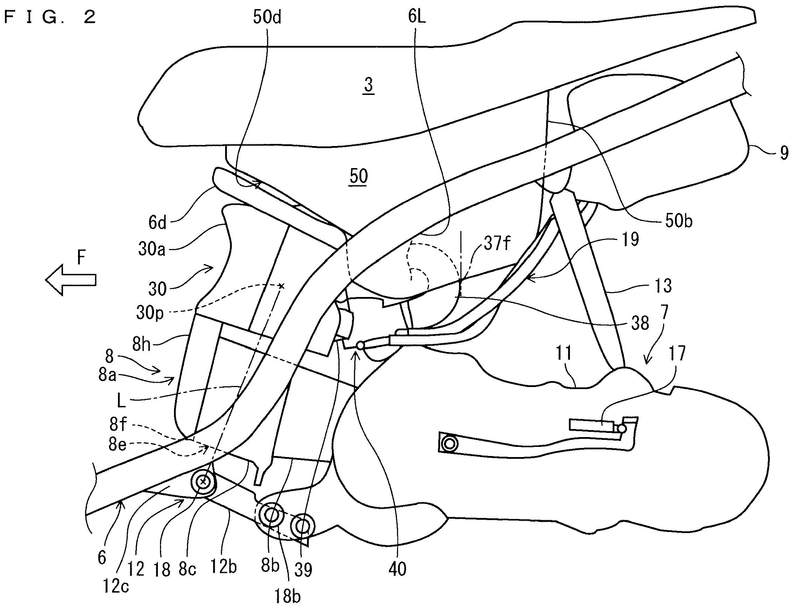

Now, a first preferred embodiment of the present invention will be described in conjunction with the accompanying drawings. Fig. 1 is a left side view of a motorcycle 1 according to the present preferred embodiment. As shown in Fig. 1, the motorcycle 1 is a scooter type motorcycle. The motorcycle according to the present preferred embodiment is a vehicle including a power unit having an engine. The motorcycle according to present preferred embodiment has the power unit attached to the vehicle body frame in a swingable manner and includes a scooter type vehicle. In the following description, the front-back or left-right direction refers to the direction seen from a rider seated on a seat 3. The vehicle widthwise direction is the same as the left-right direction. In Fig. 2 and the other figures, F indicates the forward direction of the vehicle.

The motorcycle 1 includes a front wheel 14 and a rear wheel 15. A handle 2 is provided above the front wheel 14. The seat 3 is provided above the rear wheel 15. A footboard 4 is provided between the handle 2 and the seat 3 with respect to the front-back direction. While the motorcycle 1 travels, the feet of the rider are placed at the footboard 4.

According to the present preferred embodiment, the footboard 4 is flat shaped. However, the form of the footboard 4 is not particularly limited and does not have to be flat. The footboard 4 may have a part higher than the other part. For example, the part approximately in the center of the vehicle in the left-right direction may be higher than the outer side in the left-right direction of the vehicle. The footboard 4 may be provided each on the left and right and an upward projection may be formed between the left and right footboards. The footboard 4 may be anything that has a support portion on which the feet can be placed in a comfortable position for the rider.

Fig. 1 shows a rider and a passenger. The foot of the rider placed on the footboard 4 is indicated by a solid line. The foot of the rider touching the ground surface is drawn by a chain dotted line. The passenger behind the rider is seated at the rear part of the seat 3.

The motorcycle 1 includes a head pipe, a front frame, an under frame that are not shown. The head pipe is provided under the handle 2. The front frame is connected to the head pipe to extend backward and downward. The under frame is connected to a rear part of the front frame to extend in the front-back direction under the footboard 4.

The vehicle body of the motorcycle 1 is covered with a vehicle body cover 5. The vehicle body cover 5 includes a front cover 5d, an under cover 5c and a rear cover 5a. The rear cover 5a is provided below the seat 3. The rear cover 5a covers the storage box 50 and the air cleaner 30 (Fig. 2) that will be described. The rear cover 5a extends backward and upward. The lower edge of the rear cover 5a is apart from and above the rear wheel 15.

Fig. 2 is a left side view of the motorcycle 1 showing a peripheral structure of the engine 8. The motorcycle 1 includes left and right rear frames 6L and 6R. The left and right rear frames 6L and 6R are connected to the under frame and extend backward and upward. A coupling frame 6d is provided between the left and right rear frames 6L and 6R. The head pipe, the front frame, the under frame, and the rear frames 6L and 6R form the vehicle body frame 6. The seat 3 is supported at the left and right rear frames 6L and 6R.

The motorcycle 1 includes the power unit 7. The power unit 7 is provided under the seat 3. The power unit 7 includes the engine 8 and a transmission case 11.

The transmission case 11 stores a power transmission mechanism that transmits the power of the engine 8 to the rear wheel 15. The transmission case 11 supports the rear wheel 15. The transmission case 11 is provided at the left side of the vehicle body. The rear wheel 15 is coupled to the power unit 7 behind the engine 8.

A kick pedal 17 is provided at the left side surface of the power unit 7. When the kick pedal 17 is operated by the rider, the crankshaft 27 of the engine 8 rotates, which starts the engine 8. The engine 8 may be started by an engine starting motor that is not shown.

A fuel tank 9 is provided above the power unit 7 and under the rear part of the seat 3. The fuel tank 9 is connected to an intake amount regulator 40 through a fuel hose 19. As will be described, the intake amount regulator 40 according to the present preferred embodiment is a carburetor.

The storage box 50 is provided under the seat 3. The air cleaner 30 is provided over a cylinder 8a and under the storage box 50. The air cleaner 30 swings around the pivot shaft 18 together with the power unit 7. The air cleaner 30 is fixed to the engine 8 and swings relative to the rear frames 6L and 6R together with the power unit 7. The central position 30p of the air cleaner 30 is behind the pivot shaft 18 when seen in a side view. The line L connecting the pivot shaft 18 and the central position 30p of the air cleaner 30 is inclined from the vertical direction and directed backward and upward when seen in the side view. In the side view, the central position 30p of the air cleaner 30 matches the mid point between the front end and the rear end of the air cleaner 30 in the front-back direction and the mid point between the upper end and the lower end of the air cleaner 30 in the vertical direction.

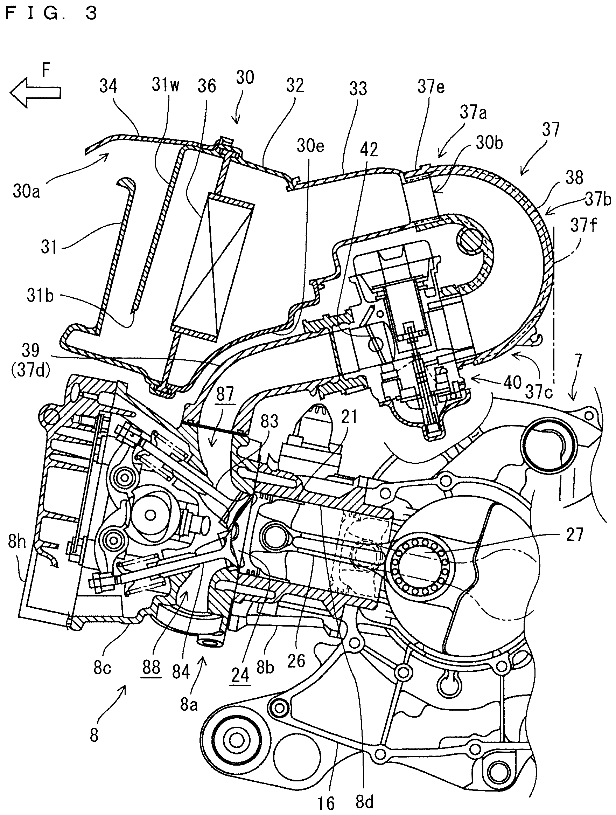

Fig. 3 is a left side sectional view of the engine 8 and the peripheral structure of the air cleaner 30. As shown in Fig. 3, the power unit 7 includes the engine 8 and the transmission case 11. The engine 8 includes a crankcase 16 and the cylinder 8a. The cylinder 8a includes a cylinder body 8b, a cylinder head 8c, and a head cover 8h.

The crankcase 16 stores the crankshaft 27. The cylinder body 8b is provided in front of the crankcase 16 and supports a piston 21 in a reciprocable manner. The cylinder head 8c is provided in front of the cylinder body 8b and has an intake port 87. The head cover 8h is provided in front of the cylinder head 8c.

The cylinder axial line of the engine 8 extends forward and upward. The engine 8 is a water-cooled single cylinder 4-cycle engine. The type of the engine 8 is not particularly limited. The engine 8 may be an air cooled type or multicylinder type engine.

One cylinder hole 8d is formed on the inner side of the cylinder body 8b. The cylinder hole 8d, the cylinder head 8c, and the piston 21 form a combustion camber 24. The crankshaft 27 is coupled to the piston 21 through a connecting rod 26. The crankshaft 27 has its axial line extended in the left-right direction of the vehicle and is supported rotatably by the crankcase 16.

An intake duct 37 and an exhaust pipe that is not shown is connected with the cylinder head 8c. The intake duct 37 is coupled to the combustion chamber 24 through an intake port 87 formed at the cylinder head 8c. The exhaust pipe is coupled to the combustion chamber 24 through an exhaust port 88 formed at the cylinder head 8c.

The intake port 87 is provided with an intake valve 83. The intake valve 83 is driven up and down relative to the axial line of the valve, so that the connecting state between the intake port 87 and the combustion chamber 24 is switched. The exhaust port 88 is provided with an exhaust valve 84. The exhaust valve 84 is driven up and down relative to the axial line of the valve, so that the connecting state between the exhaust port 88 and the combustion chamber 24 is switched.

The transmission case 11 stores a belt type continuously variable transmission. Torque generated by the crankshaft 27 is transmitted to the rear wheel 15 from the power unit 7 through a centrifugal clutch. The centrifugal clutch switches the transmission state of the power to the rear wheel 15 based on the rotation speed of the crankshaft 27. More specifically, the motorcycle 1 includes a so-called automatic transmission device. The type of the transmission device provided in the motorcycle 1 is not particularly limited.

The power unit 7 is a so-called unit swing type device and swings in the vertical direction together with the rear wheel 15 around the pivot shaft 18. As shown in Fig. 2, the power unit 7 is supported swingably at the vehicle body frame 6 through a link mechanism 12. Link members 12b and brackets 12c are provided between the vehicle body frame 6 and the engine 8. The pivot shaft 18, the link members 12b, the brackets 12c and the like form the link mechanism 12.

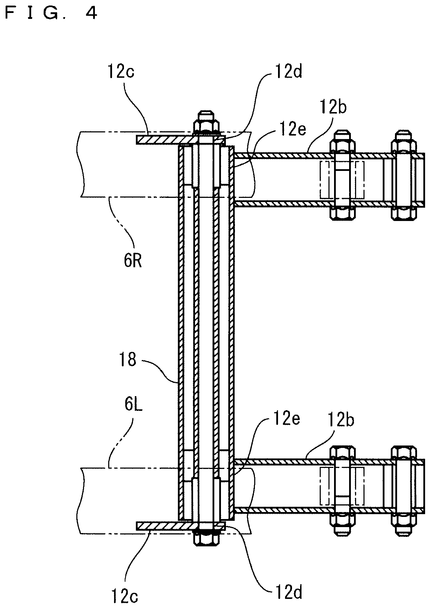

Fig. 4 is plan sectional view of the support structure of the pivot shaft 18. As shown in Fig. 4, the pivot shaft 18 has its ends supported at left and right holes 12d formed at the left and right brackets 12c. The pivot shaft 18 is inserted in the left and right holes 12e formed at the front part of the left and right link members 12b on the inner side of the left and right brackets 12c. The pivot shaft 18 extends in the left-right direction of the vehicle. The brackets 12c are fixed at the rear frames 6L and 6R. The front part of the link member 12b is supported in a swingable manner around the pivot shaft 18 relative to the bracket 12c. An engine side support shaft 18b (Fig. 2) is supported by a hole formed at the engine 8 and a hole formed at the rear part of the link member 12b and extends in the left-right direction of the vehicle.

As shown in Fig. 2, the pivot shaft 18 is provided under the cylinder 8a. More specifically, the pivot shaft 18 is provided below the front end 8f of the lower surface 8e of the cylinder 8a. In this arrangement, the power unit 7 swings around the pivot shaft 18. A cushion member 13 is provided between the power unit 7 and the rear frames 6L and 6R.

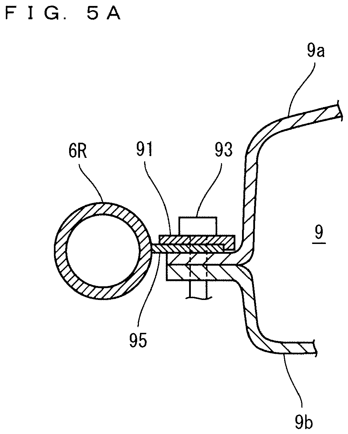

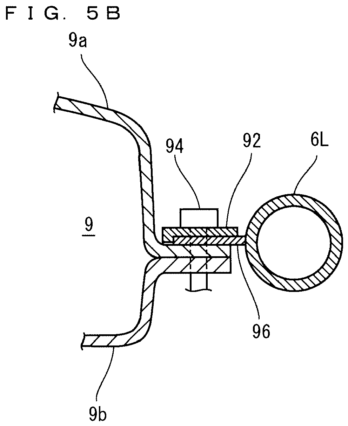

Figs. 5A and 5B are sectional views of the fuel tank 9 as it is seen from the front. Fig. 5A shows the right side part of the fuel tank 9 and Fig. 5B shows the left side part of the fuel tank 9. As shown in Figs. 5A and 5B, the fuel tank 9 has upper and lower cases 9a and 9b. The outer edges of the upper case 9a and the lower case 9b each have a flange shape.

As shown in Fig. 5A, the flange-shaped parts of the upper and lower cases 9a and 9b are fixed to brackets 91 and 95 by a bolt 93. The bracket 95 is fixed to the right rear frame 6R by welding.

As shown in Fig. 5B, the flange-shaped parts of the upper and lower cases 9a and 9b are fixed to the brackets 92 and 96 by a bolt 94. The bracket 96 is fixed to the left rear frame 6L by welding.

The brackets 91 and 92 are interposed between the fuel tank 9 and the left and right rear frames 6R and 6L, so that a vertical load applied on the fuel tank 9 by the rear frames 6R and 6L is absorbed by the brackets 91 and 92. Vertical stress applied on the fuel tank 9 by the rear frames 6R and 6L is reduced by the brackets 91 and 92.

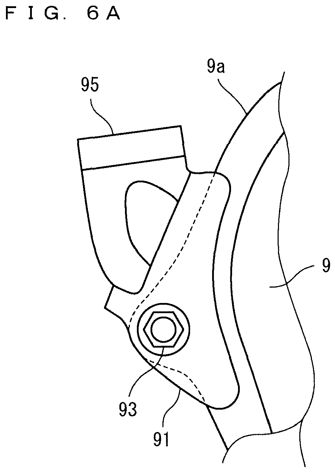

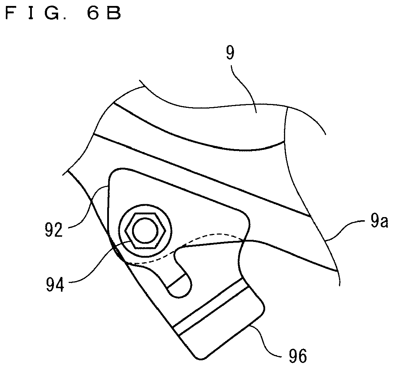

Fig. 6A is a plan view of a right part of the fuel tank 9. Fig. 6B is a plan view of a left part of the fuel tank 9. As shown in Fig. 6A, the brackets 91 and 95 are fixed to the fuel tank 9 by the bolt 93. As shown in Figs. 6B, the brackets 92 and 96 are fixed to the fuel tank 9 by the bolt 94. As described above, the bracket 95 is fixed to the right rear frame 6R by welding, and the bracket 96 is fixed to the left rear frame 6L by welding.

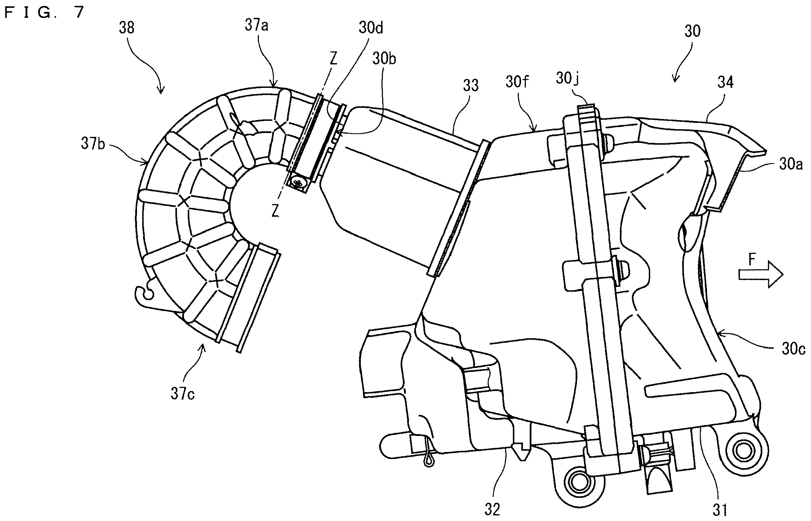

Fig. 7 is a right side view of the air cleaner 30. As shown in Fig. 7, the air cleaner 30 has a front case 31, a rear case 32, a funnel portion 33, and an upper cover 34. The front case 31, the rear case 32, and the funnel portion 33 are provided in the mentioned order from the front toward the back. The air cleaner 30 has an air inlet 30a and an air outlet 30b. Air is introduced through the air inlet 30a from the front of the air cleaner 30 into the air cleaner 30. Air in the air cleaner 30 is discharged from the air outlet 30b from behind the air cleaner 30. As shown in Fig. 3, a filter 36 is provided in the air cleaner 30. The filter 36 cleans air taken into the air cleaner 30.

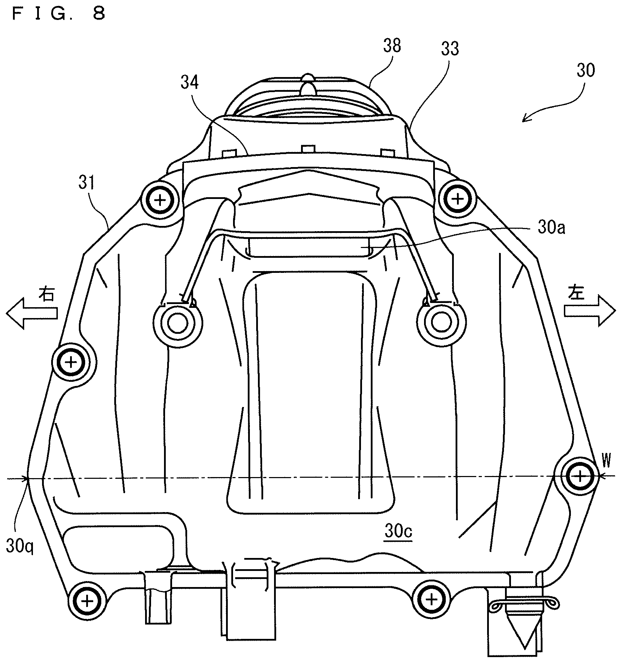

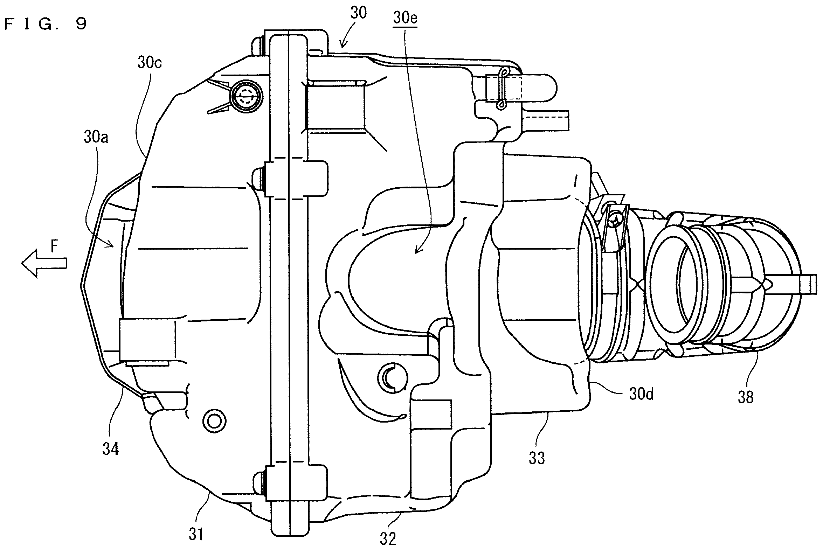

Fig. 8 is a front view of the air cleaner 30. Fig. 9 is a bottom view of the air cleaner 30. As shown in Figs. 7 to 9, the air inlet 30a is provided at the front surface 30c of the air cleaner 30. The air inlet 30a is formed at the front case 31 and the upper cover 34. The air inlet 30a is formed above the intermediate position of the front surface 30c of the air cleaner 30 in the vertical direction. The top of the air inlet 30a is covered with the upper cover 34, and the air cleaner 30 allows air under the air cleaner 30 to be easily introduced. The upper cover 34 prevents dust or the like floating in the upper part of the air cleaner 30 from coming into the air cleaner 30.

As shown in Fig. 1, the vehicle body cover 5 has a seat cover 20 that extends upward from the rear part of the footboard 4. The seat cover 20 is provided in front of the air cleaner 30. The seat cover 20 is a part of the rear cover 5a. According to the present preferred embodiment, the seat cover 20 can be separated as a part of the rear cover 5a. However, the seat cover 20 may be formed integrally with the rear cover 5a, or the manner of dividing the cover is not particularly limited. The under cover 5c is provided under the seat cover 20.

As shown in Fig. 2, the air cleaner 30 is provided above the engine 8 and under the lower surface 50d of the storage box 50. As shown in Fig. 1, the upper part of the engine 8 is at least covered with the vehicle body cover 5 including the front cover 20, and therefore the air cleaner 30 is not directly exposed to water, dust or the like from the outside of the vehicle body.

Referring back to Fig. 3, a straightening vane 31w is provided inside the front case 31. The straightening vane 31w extends downward from the upper surface of the front case 31. Although not shown, the straightening vane 31w extends in the vertical direction in the vicinity of the center of the front case 31 in the left-right direction of the vehicle. The straightening vane 31w is not provided at the left and right ends in the front case 31. Air coming into the air cleaner 30 through the air inlet 30a is made to flow downward from the upper part of the front cases 31 along the surface of the straightening vane 31w by the straightening vane 31w. Air that flows in the lower part in the front case 31 is directed to the filter 36 from the lower end 31b of the straightening vane 31w. In this way, in the air cleaner 30, air coming in from the air inlet 30a flows smoothly to the filter 36. A sufficient path length is secured from the air inlet 30a to the filter 36 in the air cleaner 30.

As shown in Fig. 7, the air outlet 30b is formed at the rear surface 30d of the air cleaner 30. The air outlet 30b is formed at the rear end of the funnel portion 33 provided on the rear side of the air cleaner 30. In the air cleaner 30, air is introduced from the front and inside air is discharged to the back. The air outlet 30b has an elliptical section having the major axis in the vehicle left-right direction and the minor axis in the vertical direction. The air outlet 30b has a flat shape having a shorter length in the vertical direction than in the horizontal direction.

As shown in Fig. 7, the rear surface 30d is directed backward and obliquely upward. The air cleaner 30 has an upper surface 30f. The upper surface 30f is inclined slightly downward toward the back. The upper surface 30f includes the upper surfaces of the rear case 32 and the front case 31. More specifically, the upper surfaces of the rear case 32 and the front case 31 are inclined slightly downward toward the back. The air outlet 30b is provided below an upper end 30j of the air cleaner 30. The upper end 30j of the air cleaner 30 is positioned at the upper surface 30f. The upper end 30j of the air cleaner 30 is positioned at the flange part where the rear case 32 and the front case 31 are connected.

As shown in Fig. 8, the air cleaner 30 has a protrusion 30q that protrudes in the vehicle left-right direction. The width of the air cleaner 30 in the vehicle left-right direction has the maximum width W at the position of the protrusion 30q. According to the present preferred embodiment, the protrusion 30q is positioned below the intermediate position of the air cleaner 30 in the vertical direction.

As shown in Fig. 9, an upward concave portion 30e is formed at the bottom of the air cleaner 30. More specifically, an upwardly curved part is formed at the bottom of the air cleaner 30. The concave portion 30e is positioned above the other part of the bottom. The concave portion 30e is positioned in the center of the air cleaner 30 in the left-right direction of the vehicle. The concave portion 30e is positioned at a rear portion of the air cleaner 30 in the front-back direction of the vehicle. The concave portion 30e is formed in the rear case 32.

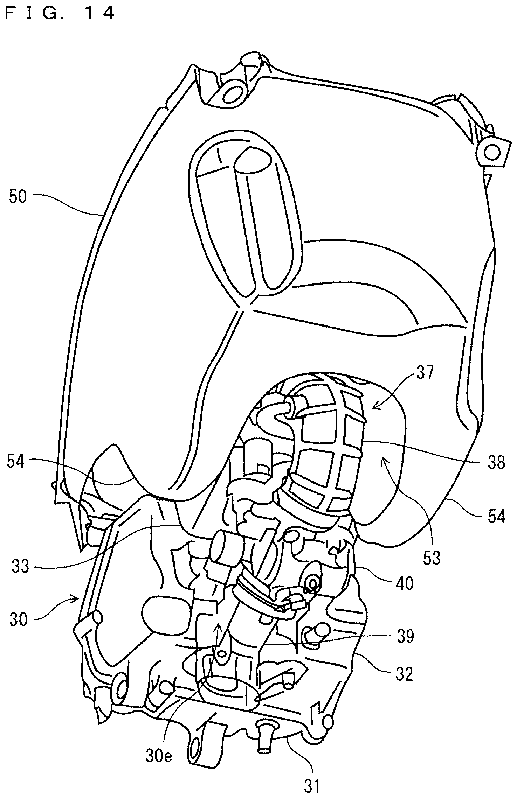

As shown in Fig. 3, the concave portion 30e is formed to extend from the bottom of the rear case 32 to the rear end thereof. The width of the concave portion 30e is greater in the back part than in the front part. The concave portion 30e is open toward the back at the rear end of the rear case 32 (see for example Fig. 14). As will be described, at least a part of the intake duct 37 is provided below the concave portion 30e to overlap the air cleaner 30 when seen in a side view. According to the present preferred embodiment, the concave portion 30e is formed at the bottom of the rear case 32. According to the present preferred embodiment, at least a part of the intake duct 37 positioned above the cylinder head 8c is provided under the concave portion 30e.

As shown in Fig. 3, the intake duct 37 and an intake amount regulator 40 are provided between the cylinder head 8c of the engine 8 and the air cleaner 30. An intake path connected to the engine 8 and the air cleaner 30 is formed from the intake duct 37 and the intake amount regulator 40. The intake duct 37 connects the intake port 87 of the cylinder head 8c and the air outlet 30b of the air cleaner 30.

The intake duct 37 has an approximately U-shape when seen from a side of the vehicle body. The intake duct 37 has a part that extends generally backward from the air cleaner 30 and is then curved downward and further generally forward. The term "generally backward" simply refers to backward extension regardless of its angle. For example, it may extend in the horizontal direction or may be inclined from the horizontal direction. The term "generally forward" simply refers to forward extension regardless of its angle. For example, it may extend in the horizontal direction or it may be inclined from the horizontal direction.

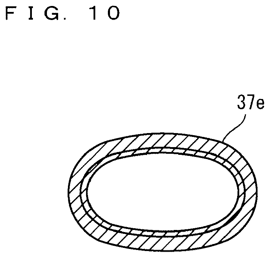

As shown in Fig. 10, the connection portion 37e of the intake duct 37 has a flat shape whose vertical length is shorter than its horizontal length. The intake duct 37 includes a first pipe 38 that connects the air cleaner 30 and the intake amount regulator 40. The intake duct 37 includes a second pipe 39 that connects the intake amount regulator 40 and the cylinder 8a. As will be described, the first pipe 38 has a first portion 37a, a second portion 37b, and a third portion 37c. The second pipe 39 has a fourth portion 37d.

As shown in Fig. 3, the intake amount regulator 40 used to regulate the amount of air to be passed inside the intake duct 37 is provided between the first pipe 38 and the second pipe 39. The intake amount regulator 40 has a capacity smaller than that of the air cleaner 30.

The intake amount regulator 40 is provided behind the air cleaner 30 in the side view. The intake amount regulator 40 is provided under the air cleaner 30 in the side view. The intake amount regulator 40 is provided under the storage box 50 (Fig. 2). According to the present preferred embodiment, the intake amount regulator 40 is a carburetor. The intake amount regulator 40 includes a throttle valve 42 inside. The amount of air to be passed through the second pipe 39 of the intake duct 37 is regulated depending on the opening degree of the throttle valve 42.

As shown in Fig. 3, at least a part of the second pipe 39 is provided under the concave portion 30e of the air cleaner 30. In this way, at least a part of the second pipe 39 is arranged to overlap the air cleaner 30 when seen in a side view. According to the present preferred embodiment, the material of the first pipe 38 and the material of the second pipe 39 are different from each other. The materials of the first pipe 38 and the second pipe 39 may be the same.

As shown in Fig. 7, the first pipe 38 includes the first portion 37a that extends backward from the air cleaner 30, the second portion 37b provided behind the first portion 37a and curved downward, and the third portion 37c provided under the second portion 37b and curved forward. As shown in Fig. 3, the intake amount regulator 40 is provided in front of the third portion 37c. The intake duct 37 has a curved structure so that it can have a sufficient length. Because of the sufficient length, the intake duct 37 can have a sufficient capacity. In this way, the engine 8 can fully carry out its performance.

As shown in Fig. 3, the second pipe 39 corresponds to the fourth portion 37d of the intake duct 37. One end of the fourth portion 37d is connected to the front part of the intake amount regulator 40. The fourth portion 37d extends forward from the front part of the intake regulator 40 and then downward. The other end of the fourth portion 37d is connected to the engine 8.

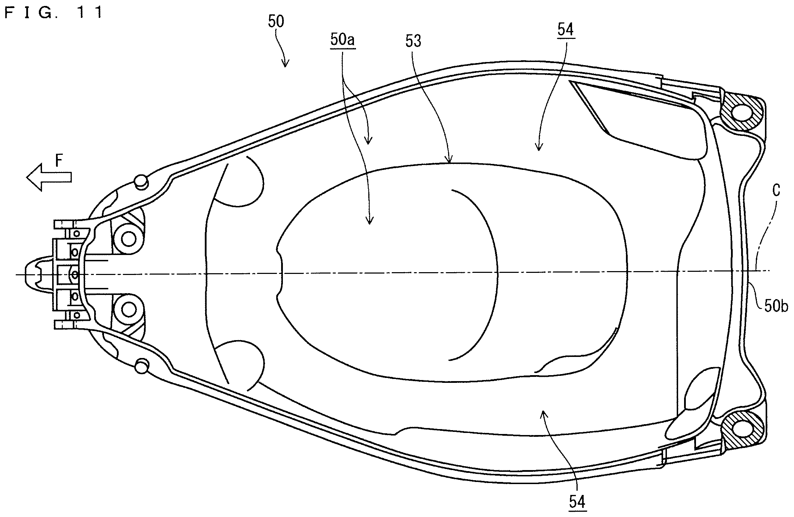

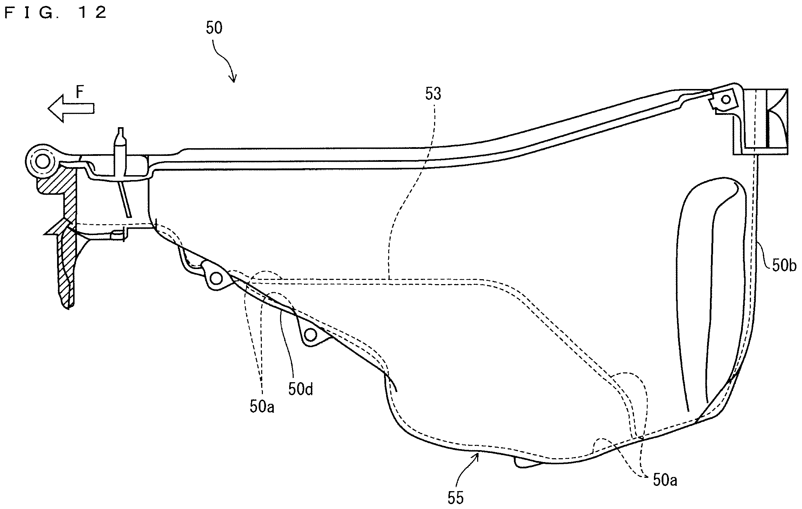

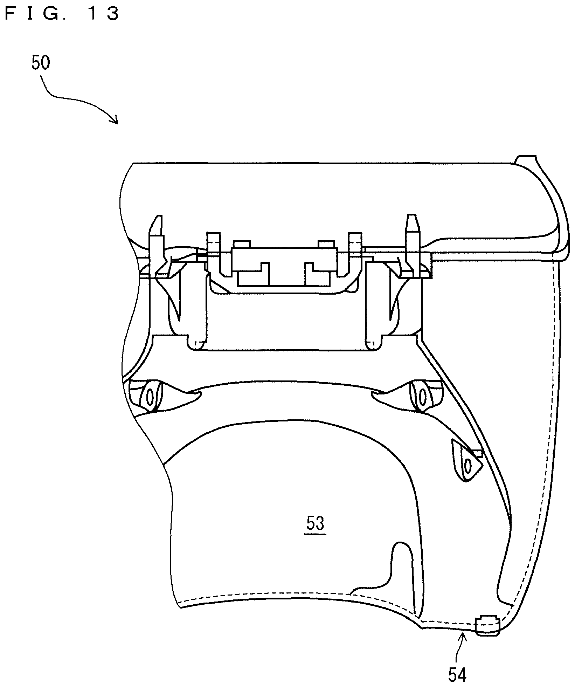

Fig. 11 is a plan view of the storage box 50. Fig. 12 is a left side view of the storage box 50. Fig. 13 is a front view of the storage box 50. As shown in Figs. 11 and 12, the storage box 50 has a bottom surface 50a that supports a stored item. The rear end 50b of the storage box 50 is positioned behind the rear end 37f of the intake duct 37 (Figs. 2 and 3). In Figs. 2 and 3, the vertical line passing through the rear end 37f of the intake duct 37 is indicated by a virtual line. As shown in Fig. 2, the storage box 50 has a lower surface 50d opposed to the upper surface 30f of the air cleaner 30 (Fig. 7). The lower surface 50d of the storage box 50 extends backward and downward. As shown in Fig. 12, the lower surface 50d of the storage box 50 is the bottom of the front part of the storage box 50.

As shown in Figs. 12 and 13, an upward concave portion 53 is formed at the bottom 55 of the storage box 50. As shown in Figs. 11 and 12, the concave portion 53 is positioned approximately in the center of the storage box 50 with respect to the front-back direction of the vehicle. The concave portion 53 is positioned approximately in the center of the storage box 50 with respect to the left-right direction of the vehicle. As shown in Fig. 12, the bottom 55 includes a lower surface 50d that extends backward and downward. The concave portion 53 is open toward the front and bottom at the bottom 55 of the storage box 50 (Figs. 13 and 14). Fig. 14 is a perspective view of the air cleaner 30 and the storage box 50 when seen from the lower left. As shown in Fig. 14, a part of the intake duct 37 is provided under the concave portion 53 of the storage box 50. In this way, the storage box 50 and the part of the intake duct 37 overlap when seen in a side view. According to the present preferred embodiment, at least a part of the first pipe 38 is provided under the concave portion 53 so that the storage box 50 and at least the part of the first pipe 38 overlap when seen in a side view.

As shown in Fig. 11, the concave portion 53 of the storage box 50 overlaps the central line C of the storage box 50 that extends in the front-back direction. The concave portion 53 of the storage box 50 is formed to extend in the front-back direction in the vicinity of the center of the vehicle in the left-right direction. The intake duct 37 under the concave portion 53 can be provided straightforward in the front-back direction when seen in a plan view. In the storage box 50, an outer bottom 54 positioned below the bottom surface of the concave portion 53 is formed at an outer side of the concave portion 53 with respect to the left-right direction of the vehicle (Fig. 13). In the storage box 50, the outer bottom 54 positioned below the bottom surface of the concave portion 53 is formed behind the concave portion 53 in the front-back direction of the vehicle. The outer bottom 54 is formed on the left and right sides of and behind the concave portion 53.

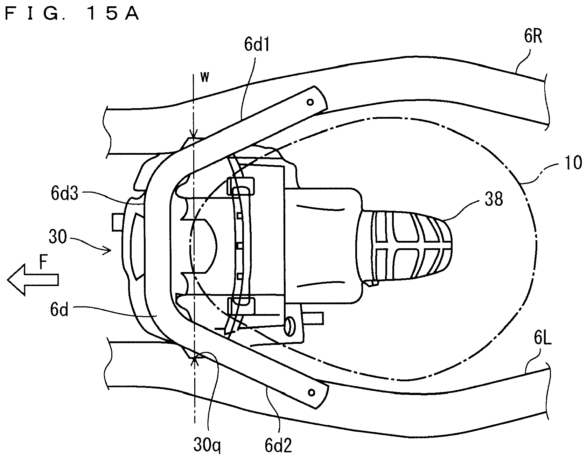

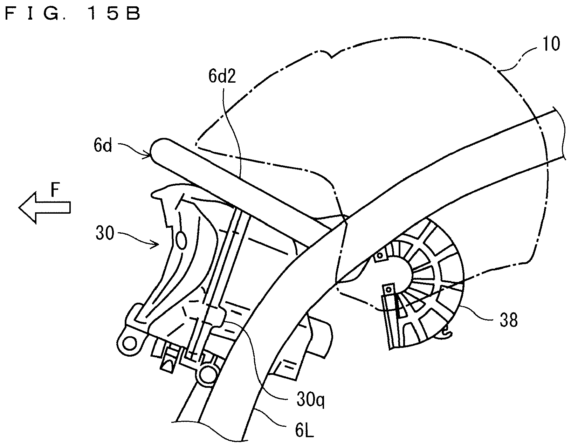

Fig. 15A is a plan view of the air cleaner 30. Fig. 15B is a left side view of the air cleaner. In Figs. 15A and 15B, a jet type helmet 10 is indicated by a chain dotted line. As shown in Fig. 15A, the coupling frame 6d is provided between the left and right rear frames 6L and 6R. The coupling frame 6d has their left and right ends connected to the left and right rear frames 6L and 6R, respectively. The coupling frame 6d includes a first portion 6d1 connected to the right rear frame 6R to extend forward, a second portion 6d2 connected to the left rear frame 6L to extend forward, and a third portion 6d3 provided between the first and second portions 6d1 and 6d2 to extend in the left-right direction of the vehicle. The air cleaner 30 overlaps the coupling frame 6d in the plan view.

As described above, the protrusion 30q of the air cleaner 30 is positioned below the intermediate position of the air cleaner 30 in the vertical direction. As shown in Fig. 15B, the coupling frame 6d is connected to the left and right rear frames 6L and 6R in a position above the protrusion 30q of the air cleaner 30. In this way, when the air cleaner 30 swings together with the power unit 7, the coupling frame 6d and the air cleaner 30 are prevented from interfering with each other. The capacity of the air cleaner 30 can be secured within the range in which the coupling frame 6d and the air cleaner 30 do not interfere with each other.

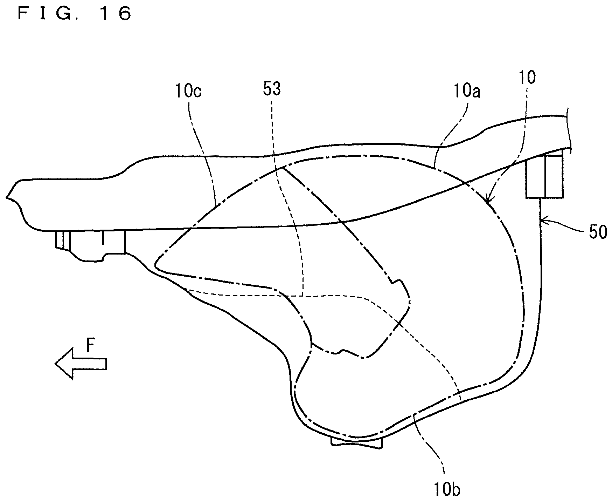

Fig. 16 is a left side view of the storage box 50 having the helmet 10 stored therein. As shown in Fig. 16, the jet type helmet 10 has an approximately hemispherical type main body 10a and projections 10b that extend downward from the left and right ends of the main body 10a. The projections 10b are covers used to protect the ears of a person wearing the helmet 10. The concave portion 53 extends into the main body 10a and the left and right projections 10b enter the left and right outer bottoms 54 (Fig. 13), so that the helmet 10 is stored in the storage box 50. The helmet 10 includes a visor 10c used to shield the face of a person wearing the helmet 10. The visor 10c is movable in the vertical direction at the front side of the helmet 10. The helmet 10 is stored in the storage box 50 in a state where the visor 10c is moved upside. In this way, the storage box 50 has a conformable shape to the shape of the jet type helmet 10.

Like the power unit 7 according to the present preferred embodiment, the manner in which the power unit 7 has its lower part supported by the vehicle body frame 6 will be referred to as the "lower part support." The manner in which the power unit 7 has its upper part supported by the vehicle body frame 6 will be referred to as the "upper part support."

A somewhat large space is necessary above the air cleaner and under the storage box so that the air cleaner and the storage box do not contact each other when the air cleaner swings.

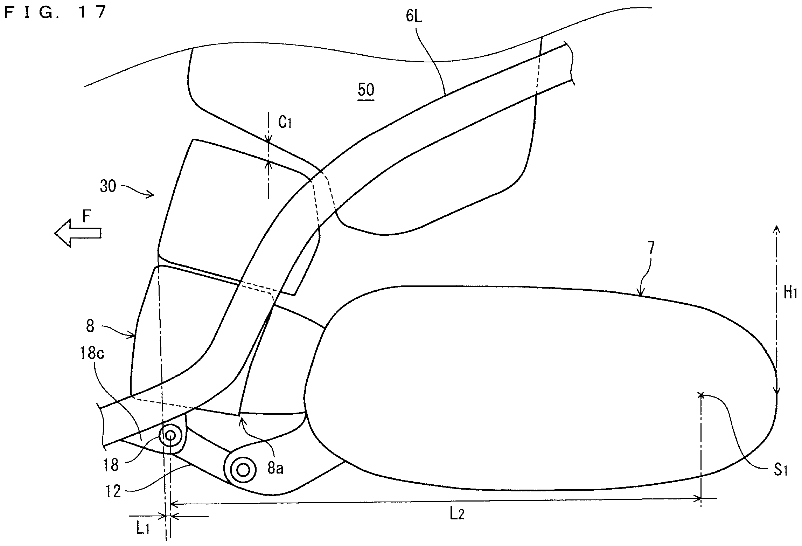

Fig. 17 is a left side view showing the positional relation between the pivot shaft 18, the engine 8, the air cleaner 30, and the storage box 50 that form the "lower part support" according to the present preferred embodiment. As for the "lower part support," the pivot shaft 18 that serves as the center of swinging is positioned under the power unit 7. The air cleaner 30 is positioned above the power unit 7.

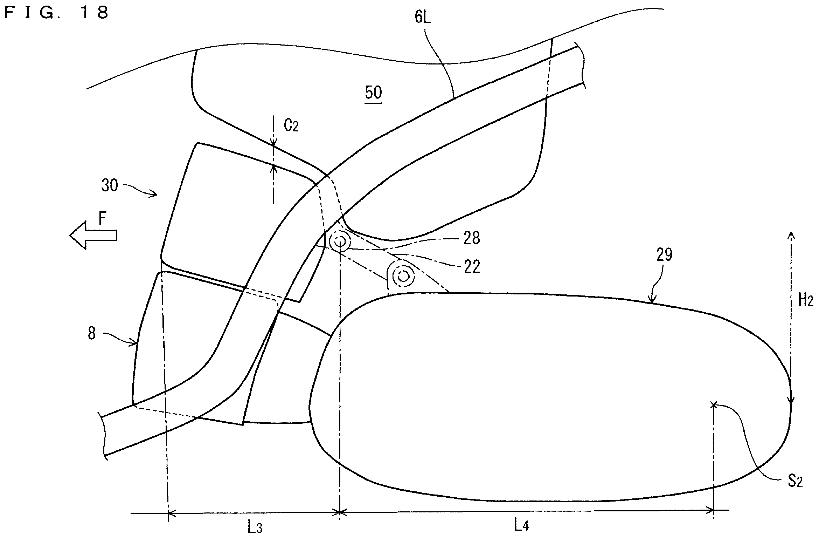

Fig. 18 is a left side view showing the positional relation between a pivot shaft 28, the engine 8, the air cleaner 30, and the storage box 50 that form the "upper part support." As for the "upper part support," the pivot shaft 28 that serves as the center of swinging is positioned above a power unit 29. The air cleaner 30 is positioned above the power unit 29.

The distance between the air cleaner and the center of swinging is greater in the "lower part support" than in the "upper part support." The amount of swinging of the air cleaner is greater in the "lower part support" than in the "upper part support."

The inventors divided the swinging amount of the air cleaner into the vertical component and the horizontal component. As a result, the inventors have found that the vertical component of the swinging amount of the air cleaner can be smaller in the "lower part support" than in the "upper part support." Therefore, the inventors have found that the capacity of the storage box under the seat could be increased effectively even in a compact vehicle body in the case of the "lower part support." More specifically, the air cleaner is provided over the cylinder and under the storage box while the storage box above the air cleaner may have a large height in the vertical direction without increasing the height of the seat.

As shown in Fig. 17, when the power unit 7 is in the "lower part support" arrangement, an approximation of the vertical swing amount $C_1$ of the air cleaner 30 is represented by the following Expression (1):

$$C_1 = H_1(L_1/L_2) \qquad \ldots(1)$$

where $H_i$ is the vertical stroke width of the power unit 7 in the "lower part support" arrangement, $L_1$ is the distance between the pivot shaft 18 and the front end position of the air cleaner 30, and $L_2$ is the distance between the pivot shaft 18 and the axel $S_1$ of the rear wheel 15.

Fig. 18 is a view of the power unit 29 in the "upper part support" arrangement. As shown in Fig. 18, when the power unit 29 in the "upper part support" arrangement is used, an approximation of the vertical swinging amount $C_2$ of the air cleaner 30 is represented by the following Expression (2). The power unit 29 in the "upper part support" arrangement is supported at the left and right rear frames 6L and 6R through a link mechanism 22 and swings around the pivot shaft 28 included in the link mechanism 22.

$$C_2 = H_2(L_3/L_4) \qquad \ldots(2)$$

where $H_2$ is the vertical stroke width of the power unit 29 in the "upper part support" arrangement, $L_3$ is the distance between the pivot shaft 28 of the power unit 29 in the "upper part support" arrangement and the front end position of the air cleaner 30, and $L_4$ is the distance between the pivot shaft 28 of the power unit 29 in the "upper part support" arrangement and the axle $S_2$ of the rear wheel 15.

The vertical stroke width of the power unit 29 in the "upper part support" arrangement and the vertical stroke width of the power unit 7 in the "lower part support" arrangement are substantially the same. Therefore, it is assumed that $H_1$ and $H_2$ are equal. As can be seen from Figs. 17 and 18, $(L_1/L_2) < (L_3/L_4)$ is established. Therefore, from Expressions (1) and (2), an approximation of the swinging amount $C_1$ in the "lower part support" arrangement is smaller than an approximation of the swinging amount $C_2$ in the "upper support" arrangement. As shown in Fig. 2 and other figures, the "lower part support" is employed according to the present preferred embodiment, and the cylinder 8a of the engine 8 and the air cleaner 30 are provided above the pivot shaft 18. In this way, the vertical component of the swinging amount of the air cleaner 30 can be relatively small. The vertical distance between the air cleaner 30 and the storage box 50 can be relatively small. Since the lower surface of the storage box 50 can be provided in a lower position, the capacity of the storage box 50 can be sufficiently large.

As shown in Fig. 18, in the "upper part support" arrangement, the link mechanism 22 is provided between the engine 8 and the storage box 50. In contrast, as shown in Fig. 17, in the "lower part support" arrangement, the link mechanism 12 is provided under the engine 8. In the "upper part support" arrangement, the capacity of the storage box 50 is reduced in order to prevent the storage box from interfering with the link mechanism 22 that swings. More specifically, the position of the bottom of the storage box 50 must be high. In the "lower part support" arrangement, the capacity of the storage box 50 can be larger than that in the "upper part support" arrangement.

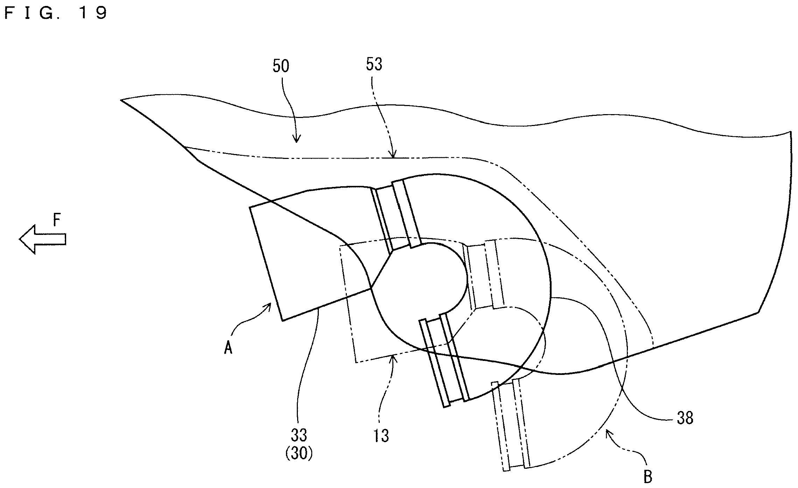

Fig. 19 is a left side view showing the positional relation between the storage box 50 and the air cleaner 30. As shown in Fig. 19, a part of the first pipe 38 of the intake duct 37 and a part of the funnel portion 33 of the air cleaner 30 are provided under the concave portion 53 of the storage box 50. When the power unit 7 swings, the air cleaner 30 and the intake duct 37 also swing together with the power unit 7. Fig. 19 shows state A in which the funnel portion 33 and the first pipe 38 are moved to a higher position and state B in which they are moved to a lower position.

The motorcycle 1 according to present preferred embodiment includes the rear cover 5a having a lower edge 5b that extends backward and upward and is separately positioned above from the rear wheel 15. The rear cover 5a is provided below the seat 3 to cover at least a part of a side of the storage box 50 in the side view. According to the present preferred embodiment, the air cleaner 30 is positioned over the cylinder 8a and the pivot shaft 18 is positioned under the cylinder 8a. More specifically, the air cleaner 30 is positioned above the pivot shaft 18. The air cleaner 30 swings around the pivot shaft 18 together with the power unit 7. Since the air cleaner 30 is positioned above the pivot shaft 18, the vertical component of the swinging amount of the air cleaner 30 is reduced. The air cleaner 30 may be positioned on the cylinder 8a. In other words, the air cleaner 30 may connect directly to an upper portion of the cylinder 8a. In the motorcycle 1 provided with the storage box 50 above the air cleaner 30, the distance between the air cleaner 30 and the storage box 50 can be kept relatively small. The capacity of the storage box 50 can be increased. According to the present preferred embodiment, water, dust or the like can be prevented from coming into the air cleaner 30 and the capacity of the storage box 50 provided under the seat 3 can be increased even in the compact vehicle body. When the rear cover extends backward and upward and a space is formed between the rear cover and the rear wheel, the vehicle can be made compact but there is a problem that the capacity of the storage box is not sufficient. In the motorcycle 1 according to the present preferred embodiment, the pivot shaft 18 is provided under the power unit 7 and the air cleaner 30 is provided above the pivot shaft 18, so that the storage box 50 can have a sufficient capacity.

According to the present preferred embodiment, the pivot shaft 18 is provided below the front end 8f of the lower surface 8e of the cylinder 8a. This reduces the vertical swinging amount of the air cleaner 30 when the power unit 7 swings.

The air cleaner 30 according to the present preferred embodiment has its central position 30p located behind the pivot shaft 18 when seen in a side view. The line L connecting the pivot shaft 18 and the central position 30p of the air cleaner 30 extends backward and upward (Fig. 2). The air cleaner 30 has an upper surface 30f that extends backward and downward and the storage box 50 faces the upper surface 30f of the air cleaner 30 and has a lower surface 50d that extends backward and downward. In this way, when the air cleaner 30 swings around the pivot shaft 18, the air cleaner 30 and the storage box 50 are prohibited from interfering with each other. When the power unit 7 is a unit swing type device, the air cleaner 30 can have a sufficient capacity without increasing the size of the vehicle body. Furthermore, the storage box 50 may have a shape provided with a large capacity and ease of use. The storage box 50 has a lower surface 50d that extends backward and downward and at least a part of the lower surface may be positioned over at least a part of the upper surface of the air cleaner 30.

The vehicle body frame 6 according to the present preferred embodiment includes the left and right rear frames 6L and 6R that extend backward and upward below the seat 3 and the coupling frame 6d that connects the left and right rear frames 6L and 6R. The air cleaner 30 overlaps the coupling frame 6d when seen in the plan view (Fig. 15A). The air cleaner 30 can be provided in a compact manner.

The air cleaner 30 has its width maximized in the left-right direction of the vehicle at the protrusion 30q. The coupling frame 6d is connected to the left and right rear frames 6L and 6R in a position higher than the protrusion 30q of the air cleaner 30. The connecting part between the coupling frame 6d and the rear frames 6L and 6R is provided in a position apart from the protrusion 30q. While a sufficient capacity is secured, the air cleaner 30 can be provided in a compact manner.

In the motorcycle 1 according to the present preferred embodiment, at least a part of the intake duct 37 is provided under the concave portion 30e of the air cleaner 30 to overlap the air cleaner 30 when seen in a side view. The air cleaner 30 and the intake duct 37 are provided relatively closely to each other with respect to the vertical direction. The bottom 55 of the storage box 50 positioned above the air cleaner 30 can be provided in a lower position and the capacity of the storage box 50 can be increased.

In the motorcycle 1 according to the present preferred embodiment, at least a part of the second pipe 39 that connects the intake amount regulator 40 and the engine 8 is provided under the concave portion 30e of the air cleaner 30 to overlap the air cleaner 30 when seen in a side view. The air cleaner 30 and the second pipe 39 are provided relatively closely to each other with respect to the vertical direction. The bottom 55 of the storage box 50 positioned above the air cleaner 30 can be provided in a lower position, and the capacity of the storage box 50 can be increased.

In the motorcycle 1 according to the present preferred embodiment, a part of the intake duct 37 is provided below the concave portion 53 of the storage box 50 to overlap the storage box 50 when seen in a side view. The capacity of the storage box 50 can be increased.

The storage box 50 stores the jet type helmet 10 that has the approximately hemispherical main body 10a and the projections 10b that extend downward from the left and right ends of the main body 10a. The concave portion 53 comes inside the main body 10a and the projections 10b enter the outer bottom 54, so that the helmet 10 is stored (Fig. 16). The storage box 50 has a shape conformed to the shape of the helmet 10 and can store the jet type helmet 10. According to the present preferred embodiment, the capacity of the storage box 50 can be increased according to the shape of the jet type helmet 10.

The motorcycle 1 according to the present preferred embodiment includes the footboard 4 provided in front of and under the seat 3 to support the feet of the rider thereon and the fuel tank 9 provided under the seat 3 and behind the storage box 50. The fuel tank 9 is not allowed to interfere with the storage box 50 with respect to the vertical direction. The storage box 50 can have a sufficient capacity in the vertical direction.

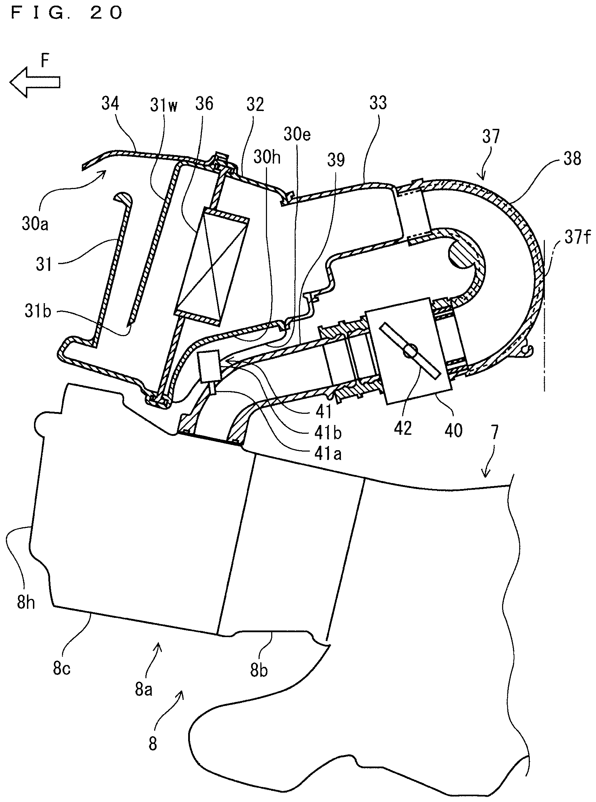

Referring to Fig. 20, a second preferred embodiment of the present invention will be described. Fig. 20 is a left side sectional view of an engine and the peripheral structure of an air cleaner according to the second preferred embodiment. In the first preferred embodiment, the intake amount regulator 40 of the motorcycle 1 is a carburetor. The motorcycle 1 according to the second preferred embodiment includes a throttle body instead of the carburetor. A fuel injector 41 used to inject fuel toward the intake port of the cylinder 8 is provided in the intake duct 37. In the second preferred embodiment, the same elements as those in the first preferred embodiment are designated by the same reference characters and their description will not be repeated.

As shown in Fig. 20, the intake amount regulator 40 includes a throttle valve 42. The amount of air to be passed through the second pipe 39 of the intake duct 37 is regulated according to the opening degree of the throttle valve 42. The fuel injector 41 is provided in the intake duct 37. According to the second preferred embodiment, the fuel injector 41 is provided in the second pipe 39. The angle formed by the direction in which the nozzle 41a and the injector main body 41b of the fuel injector 41 extend and the direction in which the second pipe 39 extends is not particularly limited. The position of the fuel injector 41 in the second pipe 39 is not particularly limited. For example, the fuel injector 41 may be provided in any position of the second pipe 39 or may be attached to the cylinder head. The number of fuel injectors 41 in the intake duct 37 is not particularly limited.

As shown in Fig. 20, the air cleaner 30 has a concave portion 30h. The concave portion 30h is hollowed more into the air cleaner 30 than the concave portion 30e in the first preferred embodiment. The intake amount regulator 40 and the fuel injector 41 have a capacity smaller than the air cleaner 30 and are provided behind the air cleaner 30 and under the storage box 50 when seen in a side view. The fuel tank 9 is connected to the intake amount regulator 40 through the fuel hose 19.

According to the present preferred embodiments, the air cleaner 30 has the air inlet 30a in the front part and the air outlet 30b in the rear part. The air cleaner 30 introduces air from the front and discharges air to the back. The air inlet may be formed in the rear part of the air cleaner 30 and the air outlet may be formed in the front part of the air cleaner 30. In this case, the intake duct 37 is provided in front of the air cleaner 30. For example, the air inlet 30a or the air outlet 30b may be formed on a side of the air cleaner 30.

The intake duct 37 may be provided to extend in the up-down direction above the cylinder 8a of the engine 8. Herein, the "up-down direction" refers not only to the vertical direction but also directions inclined from the vertical direction. As the intake duct 37 extends in the up-down direction from the upper surface of the cylinder 8a, the air cleaner 30 and the intake duct 37 are provided above the pivot shaft 18.

According to the preferred embodiments described above, at least a part of the second pipe 39 of the intake duct 37 overlaps the air cleaner 30 when seen in the side view (Fig. 3). The air cleaner 30 and the intake duct 37 do not have to overlap when seen in a side view and may be apart from each other in the vertical direction. In this case, the concave portion 30e does not have to be formed in the air cleaner 30.

According to the preferred embodiments described above, the air cleaner 30 has the concave portion 30e. However, the air cleaner 30 may have a notch along the entire width of the overlapped part with the intake duct 37 when seen in a side view instead of forming the concave portion 30e.

According to the preferred embodiments, the vehicle body cover 5 has the front cover 5d, the under cover 5c, and the rear cover 5a. The structure of the vehicle body cover 5 of the motorcycle 1 is not particularly limited.

According to the preferred embodiments, the cylinder body 8b, the cylinder head 8c and the head cover 8h are formed discretely. The cylinder head 8c and the head cover 8h may be formed integrally.

While preferred embodiments of the present invention have been described above, it is to be understood that variations and modification will be apparent to those skilled in the art.

The scope of the present invention, therefore, is to be determined solely by the following claims.

## Claims

1.  A motorcycle (1), comprising:

    a frame (6);
    a seat (3) supported at the frame (6);
    a storage box (50) provided under the seat (3);
    a power unit (7) including an engine (8) with a cylinder (8a) in the front portion and provided under the storage box (50), and a transmission case (11);
    a pivot shaft (18) that extends in the vehicle widthwise direction under the cylinder (8a) and supports the power unit (7) in a swingable manner relative to the frame (6);
    a rear wheel (15) positioned behind the cylinder (8a) and coupled to the power unit (7);
    a cover (5) having a lower edge arranged to extend backward and upward and positioned above the rear wheel (15) when seen in a side view, and provided below the seat (3) to cover at least a part of a side of the storage box (50) when seen in a side view; and an air cleaner (30) positioned under the storage box (50) to swing together with the power unit (7), **characterized in that**
    the air cleaner (30) is fixed to the engine (8) positioned over or connected directly to an upper portion of the cylinder (8a),
    wherein the air cleaner (30), considering a front-back direction of the motorcycle, is positioned forward of a carburetor (40) or throttle body (40).

2.  The motorcycle (1) according to claim 1, **characterized in that** the air cleaner (30) is positioned above the pivot shaft (18).

3.  The motorcycle (1) according to claim 1 or 2, **characterized in that** the pivot shaft (18) is provided below the front end of the lower surface of the cylinder (8a).

4.  The motorcycle (1) according to any one of claims 1 to 3, **characterized in that** the center of the air cleaner (30) is positioned behind the pivot shaft (18), the air cleaner (30) has an upper surface that extends backward and downward, and the storage box (50) has a lower surface that extends backward and downward and is positioned over the upper surface of the air cleaner (30) .

5. The motorcycle (1) according to any one of claims 1 to 4, **characterized in that** the vehicle body frame (6) comprises:

left and right rear frames (6L, 6R) that extend backward and upward below the seat (3); and a coupling frame (6d) that connects the left and right rear frames (6L, 6R), and the air cleaner (30) is provided to overlap the coupling frame (6d) when seen in a plan view.

6. The motorcycle (1) according to claim 5, **characterized in that** the air cleaner (30) has a protrusion (30q) having the maximum width of the air cleaner (30) in the vehicle widthwise direction , and the coupling frame (6d) is connected to the left and right rear frames (6L, 6R) in a position above the protrusion (30q) of the air cleaner (30).

7. The motorcycle (1) according to any one of claims 1 to 6, **characterized by** an intake path (37) that connects the air cleaner (30) and the cylinder (8a), wherein the bottom of the air cleaner (30) has an upward concave portion (30e), at least a part of the intake path (37) is provided under the concave portion (30e) of the air cleaner (30) and the part of the intake path (37) provided under the concave portion (30e)overlaps the air cleaner (30) when seen in a side view.

8. The motorcycle (1) according to claim 7, **characterized by** an intake amount regulator (40) that regulates the amount of air to be supplied to the cylinder (8a), the intake path (37) comprising:

a first duct (38) that connects the air cleaner (30) and the intake amount regulator (40); and a second duct (39) that connects the intake amount regulator (40) and the cylinder (8a), at least a part of the second duct (39) being provided under the concave portion (30e) of the air cleaner (30), the second duct (39) being provided to overlap the air cleaner (30) when seen in a side view.

9. The motorcycle (1) according to any one of claims 1 to 6, **characterized by** an intake path (37) that connects the air cleaner (30) and the cylinder (8a), the bottom of the storage box (50) having an upward concave portion (53), a part of the intake path (37) being provided under the concave portion (53) of the storage box (50) to overlap the storage box (50) when seen in a side view.

10. The motorcycle (1) according to any one of claims 1 to 9, **characterized by:**

a footboard (4) provided in front of and below the seat (3); and a fuel tank (9) provided under the seat (3) and behind the storage box (50).

**Patentansprüche**

1. Ein Motorrad (1), das umfasst:

einen Rahmen (6); einen Sitz (3), der an dem Rahmen (6) gelagert ist; eine Lager-Box (50), die unter dem Sitz (3) vorgesehen ist; eine Leistungs-Einheit (7), die einen Motor (8) mit einem Zylinder (8a), der in dem vorderen Abschnitt und unter der Lager-Box (50) vorgesehen ist, und ein Getriebegehäuse (11) beinhaltet; eine Schwenk-Welle (18), die sich in der Fahrzeug-Breiten-Richtung unter dem Zylinder (8a) erstreckt, und die Leistungs-Einheit (7) in schwingender Weise relativ zu dem Rahmen (6) lagert; ein Hinter-Rad (15), das hinter dem Zylinder (8a) positioniert ist und mit der Leistungs-Einheit (7) gekoppelt ist; eine Abdeckung (5), die eine untere Kante hat, welche angeordnet ist sich nach hinten und oben zu erstrecken, und oberhalb des Hinter-Rads (15) positioniert ist wenn gesehen von einer Seiten-Ansicht, und unterhalb des Sitzes (3) vorgesehen ist um zumindest einen Teil der Seite der Lager-Box (50) abzudecken, wenn gesehen in der Seiten-Ansicht; und einen Luft-Filter (30), der unter der Lager-Box (50) positioniert ist, um zusammen mit der Leistungs-Einheit (7) zu schwingen, **dadurch gekennzeichnet dass** der Luft-Filter (30) an dem Motor (8) fixiert ist, positioniert über oder direkt verbunden mit einem oberen Abschnitt des Zylinders (8a), wobei der Luft-Filter (30) unter Berücksichtigung einer Vorder-Rück-Richtung des Motorrads vor einem Vergaser (40) oder Drossel-Körper (40) positioniert ist.

2. Das Motorrad (1) gemäß Anspruch 1, **dadurch gekennzeichnet, dass** der Luft-Filter (30) oberhalb der Schwenk-Welle (18) positioniert ist.

3. Das Motorrad (1) gemäß Anspruch 1 oder 2, **dadurch gekennzeichnet, dass** die Schwenk-Welle (18) unterhalb des Vorder-Endes der unteren Fläche des Zylinders (8a) vorgesehen ist.

**4.** Das Motorrad (1) gemäß irgendeinem der Ansprüche 1 bis 3, **dadurch gekennzeichnet, dass** die Mitte des Luft-Filters (30) hinter der Schwenk-Welle (18) positioniert ist,
der Luft-Filter (30) hat eine obere Fläche welche sich nach hinten und unten erstreckt, und die Lager-Box (50) hat eine untere Fläche, welche sich nach hinten und unten erstreckt und ist über der oberen Fläche des Luft-Filters (30) positioniert.

**5.** Das Motorrad (1) gemäß irgendeiner der Ansprüche 1 bis 4, **dadurch genkennzeichnet, dass** der Fahrzeug-Körper-Rahmen (6) umfasst:

linke und rechte hintere Rahmen (6L, 6R), die sich nach hinten und oben unter dem Sitz (3) erstrecken; und
einen Kopplungs-Rahmen (6d), welcher die linken und rechten hinteren Rahmen (6L, 6R) verbindet, und der Luft-Filter (30) ist vorgesehen um den Kopplungs-Rahmen (6d) zu überlappen, wenn gesehen in einer Draufsicht.

**6.** Das Motorrad (1) gemäß Anspruch 5, **dadurch gekennzeichnet, dass** der Luft-Filter (30) einen Vorsprung (30q) hat, der eine maximale Breite des Luft-Filters (30) in der Fahrzeug-Breiten-Richtung hat, und
der Kopplungs-Rahmen (6d) ist mit den linken und rechten hinteren Rahmen (6L, 6R) in einer Position über dem Vorsprung (30q) des Luft-Filters (30) verbunden.

**7.** Das Motorrad (1) gemäß irgendeinem der Ansprüche 1 bis 6, **gekennzeichnet durch** einen Einlass-Pfad (37), welcher den Luft-Filter (30) und den Zylinder (8a) verbindet, wobei der Boden des Luft-Filters (30) einen nach oben konkaven Abschnitt (30e) hat, zumindest ein Teil des Einlass-Pfades (37) ist unter dem konkaven Abschnitt (30e) des Luft-Filters (30) vorgesehen, und der Teil des Einlass-Pfades (37) der unter dem konkaven Abschnitt (30e) vorgesehen ist, überlappt den Luft-Filter (30) wenn gesehen in einer Seiten-Ansicht.

**8.** Das Motorrad (1) gemäß Anspruch 7, **gekennzeichnet durch** einen Einlass-Mengen-Regulator (40) welcher die Menge von Luft, die dem Zylinder (8a) zuzuführen ist, reguliert,
der Einlass-Pfad (37) umfasst:

einen ersten Anschluss (38), welcher den Luft-Filter (30) und den Einlass-Mengen-Regulator (40) verbindet; und
einen zweiten Anschluss (39), welcher den Einlass-Mengen-Regulator (40) und den Zylinder (8a) verbindet, zumindest ein Teil des zweiten Anschlusses (39) ist unter dem konkaven Abschnitt (30e) des Luft-Filters (30) vorgesehen, der zweite Anschluss (39) ist vorgesehen, um den Luft-Filter (30) zu überlappen, wenn gesehen in einer Seiten-Ansicht.

**9.** Das Motorrad (1) gemäß irgendeinem der Ansprüche 1 bis 6, **gekennzeichnet durch** einen Einlass-Pfad (37), welcher den Luft-Filter (30) und den Zylinder (8a) verbindet, der Boden der Lager-Box (50) hat einen aufwärts konkaven Abschnitt (53), ein Teil des Einlass-Pfades (37) ist unter den konkaven Abschnitt (53) der Lager-Box (50) vorgesehen, um die Lager-Box (50) zu überlappen, wenn gesehen in einer Seiten-Ansicht.

**10.** Das Motorrad (1) gemäß irgendeinem der Ansprüche 1 bis 9, **gekennzeichnet durch:**

ein Fuß-Brett (4), das vor und unterhalb des Sitzes (3) vorgesehen ist; und
einen Kraftstoff-Tank (9) der unter dem Sitz (3) und hinter der Lager-Box (50) vorgesehen ist.

**Revendications**

**1.** Motocyclette (100) comprenant :

un châssis (6) ;
un siège (3) supporté par le châssis (6) ;
un coffre de rangement (50) pourvu sous le siège (3) ;
une unité génératrice (7) incluant un moteur (8) avec un cylindre (8a) dans la portion avant et pourvu sous le coffre de rangement (50), et un boîtier de transmission (11) ;
un axe de pivotement (18) qui s'étend en direction de la largeur du véhicule sous le cylindre (8a) et supporte l'unité génératrice (7) de manière pivotante par rapport au châssis (6) ;
une roue arrière (15) positionnée derrière le cylindre (8a) et couplée à l'unité génératrice (7) ;
un carénage (5) ayant un bord inférieur agencé pour s'étendre vers l'arrière et vers le haut et positionné au-dessus de la roue arrière (15) en vue latérale, et pourvu au-dessous du siège (3) pour recouvrir au moins une partie d'un côté du coffre de rangement (50) en vue latérale ; et
un filtre à air (30) positionné sous le coffre de rangement (50) pour pivoter conjointement à l'unité génératrice (7),
**caractérisée en ce que**
le filtre à air (30) est fixé au moteur (8) positionné au-dessus d'une portion supérieure du cylindre (8a) ou connecté directement à celle-ci,
dans lequel le filtre à air (30), en considérant une direction avant-arrière de la motocyclette, est positionné devant un carburateur (40) ou un corps de vanne d'étranglement (40).

2.  Motocyclette (1) selon la revendication 1, **caractérisée en ce que** le filtre à air (30) est positionné au-dessus de l'axe de pivotement (18).

3.  Motocyclette (1) selon la revendication 1 ou 2, **caractérisée en ce que** l'axe de pivotement (18) est pourvu sous l'extrémité avant de la surface inférieure du cylindre (8a).

4.  Motocyclette (1) selon l'une quelconque des revendications 1 à 3, **caractérisée en ce que**
    le centre du filtre à air (30) est positionné derrière l'axe de pivotement (18),
    le filtre à air (30) présente une surface supérieure qui s'étend vers l'arrière et vers le bas, et
    le coffre de rangement (50) présente une surface inférieure qui s'étend vers l'arrière et vers le bas et est positionné par-dessus la surface supérieure du filtre à air (30).

5.  Motocyclette (1) selon l'une quelconque des revendications 1 à 4, **caractérisée en ce que**
    le châssis de corps de véhicule (6) comprend :

    des châssis arrière gauche et droit (6L, 6R) qui s'étendent vers l'arrière et vers le haut sous le siège (3) ; et
    un châssis d'accouplement (6d) qui connecte les châssis arrière gauche et droit (6L, 6R), et le filtre à air (30) est pourvu pour chevaucher le châssis d'accouplement (6d) en vue en plan.

6.  Motocyclette (1) selon la revendication 5, **caractérisée en ce que**
    le filtre à air (30) présente une protrusion (30q) ayant la largeur maximale du filtre à air (30) en direction de la largeur du véhicule, et
    le châssis d'accouplement (6d) est connecté aux châssis arrière gauche et droit (6L, 6R) dans une position au-dessus de la protrusion (30q) du filtre à air (30).

7.  Motocyclette (1) selon l'une quelconque des revendications 1 à 6, **caractérisée par**
    un chemin d'admission (37) qui connecte le filtre à air (30) et le cylindre (8a), dans lequel le fond du filtre à air (30) présente une portion concave vers le haut (30e), au moins une partie du chemin d'admission (37) est pourvue sous la portion concave (30e) du filtre à air (30), et la partie du chemin d'admission (37) pourvue sous la portion concave (30e) chevauche le filtre à air (30) en vue latérale.

8.  Motocyclette (1) selon la revendication 7, **caractérisée par**
    un régulateur de quantité d'admission (40) qui régule la quantité d'air alimenté au cylindre (8a),
    le chemin d'admission (37) comprend :

    un premier conduit (38) qui connecte le filtre à air (30) et le régulateur de quantité d'admission (40) ; et
    un deuxième conduit (39) qui connecte le régulateur de quantité d'admission (40) et le cylindre (8a), au moins une partie du deuxième conduit (39) étant pourvue sous la portion concave (30e) du filtre à air (30),
    le deuxième conduit (39) étant pourvu pour chevaucher le filtre à air (30) en vue latérale.

9.  Motocyclette (1) selon l'une quelconque des revendications 1 à 6, **caractérisée par** un chemin d'admission (37) qui connecte le filtre à air (30) et le cylindre (8a),
    le fond du coffre de rangement (50) présentant une portion concave vers le haut (53),
    une partie du chemin d'admission (37) étant pourvue sous la portion concave (53) du coffre de rangement (50) pour chevaucher le coffre de rangement (50) en vue latérale.

10. Motocyclette (1) selon l'une quelconque des revendications 1 à 9, **caractérisée par** :

    un marchepied (4) pourvu devant ou sous le siège (3) ; et
    un réservoir de carburant (9) pourvu sous le siège (3) et derrière le coffre de rangement (50).

F I G. 1

FIG. 2

FIG. 3

F I G. 4

F I G. 5 A

F I G. 5 B

9a

94    92    6L

9

96

9b

F I G. 6 A

F I G.  6 B

FIG. 7

FIG. 8

右 ← 　　　左 →

F I G. 9

EP 2 287 459 B1

FIG. 10

F I G. 11

FIG. 12

EP 2 287 459 B1

F I G. 1 3

50

53

54

EP 2 287 459 B1

FIG. 14

29

FIG. 15A

FIG. 15B

F I G. 1 6

FIG. 17

FIG. 18

EP 2 287 459 B1

F I G .   1 9

FIG. 20

**EP 2 287 459 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20080046554 A
- JP 1223091 A
- JP 2007168530 A